# DEMANDE DE BREVET EUROPEEN

(11) **EP 3 678 226 A1**
(43) Date de publication de la demande: **08.07.2020**
(21) Numéro de dépôt: 19220262.0
(22) Date de dépôt: 31.12.2019
(51) Int. Cl.: H01M 4/04, H01M 4/131, H01M 4/134, H01M 4/136, H01M 4/36, H01M 4/38, H01M 4/525, H01M 4/58, H01M 4/62, H01M 4/66, H01M 10/052, H01M 10/0565, H01M 10/0568

(54) **CELLULE ÉLECTROCHIMIQUE POUR ACCUMULATEUR AU LITHIUM COMPRENANT UNE ÉLECTRODE NÉGATIVE SPÉCIFIQUE EN LITHIUM MÉTALLIQUE ET UNE ÉLECTRODE POSITIVE SUR COLLECTEUR EN ALUMINIUM**

(30) Priorité: 03.01.2019 FR 1900047
(71) Demandeur: Commissariat à l'énergie atomique et aux énergies alternatives, 75015 Paris (FR)
(72) Inventeur: REYNIER, Yvan, 38054 GRENOBLE CEDEX 09 (FR); BARCHASZ, Céline, 38054 GRENOBLE CEDEX 09 (FR)
(74) Mandataire: Brevalex

(57) **Abrégé**

L'invention a trait à une cellule électrochimique pour accumulateur au lithium comprenant :
-une électrode négative comprenant, comme matériau actif, du lithium métallique ;
-une électrode positive associée à un collecteur de courant en aluminium; et
-un électrolyte liquide ou gélifié disposé entre ladite électrode négative et ladite électrode positive, caractérisée en ce que l'électrode négative est pourvue, au niveau de sa face en contact avec l'électrolyte, d'une couche comprenant un composé comprenant de l'aluminium, lequel composé est un sel d'aluminium, et en ce que l'électrolyte comprend au moins un sel de lithium choisi parmi les sels imidures de lithium, le triflate de lithium, le perchlorate de lithium et des mélanges de ceux-ci.

## Description

### DOMAINE TECHNIQUE

La présente invention a trait à une cellule électrochimique pour accumulateur au lithium comprenant une association entre une électrode négative spécifique à base de lithium métallique et une électrode positive sur collecteur de courant en aluminium, permettant notamment, d'obtenir d'excellentes performances en termes de cyclabilité.

Le domaine général de l'invention peut ainsi être défini comme celui des dispositifs de stockage d'énergie, en particulier celui des accumulateurs électrochimiques au lithium.

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydo-réduction, moyennant quoi il y a production d'électrons à l'origine du courant électrique et productions d'ions qui vont circuler d'une électrode à l'autre par le biais d'un électrolyte.

Des accumulateurs de ce type les plus usités actuellement sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
   *les accumulateurs Acide-Plomb utilisant du plomb et de l'oxyde de plomb PbO₂ comme matériaux d'électrode ; et
*les accumulateurs au lithium, tels que les accumulateurs lithium-ion (dont, en principe, le matériau actif d'électrode positive et le matériau actif d'électrode négative sont des matériaux à insertion de lithium) ou les accumulateurs lithium-métal (dont l'électrode négative est constituée de lithium métallique).

Du fait que le lithium est un élément solide particulièrement léger et présente un potentiel électrochimique le plus faible, permettant ainsi l'accès à une densité d'énergie massique intéressante, les accumulateurs au lithium ont détrôné largement les autres accumulateurs mentionnés ci-dessus et s'avèrent particulièrement intéressants pour les domaines où l'autonomie est un critère primordial, tels que cela est le cas des domaines de l'informatique, de la vidéo, de la téléphonie mobile, des transports tels que les véhicules électriques, les véhicules hybrides, ou encore des domaines médicaux, spatiaux, de la microélectronique.

Les accumulateurs lithium-métal comportent classiquement au moins une cellule électrochimique, composée des éléments suivants :
- une électrode négative à base de lithium métallique ;
- une électrode positive à base d'un composé apte à insérer du lithium ; et
- une membrane électrolytique (pouvant être dénommée, également, séparateur) disposée entre ladite électrode négative et ladite électrode positive.

Toutefois, si le lithium métallique utilisé comme constituant des électrodes négatives permet l'obtention d'une tension nominale de cellule élevée et d'excellentes densités d'énergie massique et volumique, il peut s'avérer néfaste lors des processus de cyclage des accumulateurs. En effet, lors des processus de cyclage, le lithium métallique est alternativement dissous dans l'électrolyte, sous forme d'ions, lors des décharges, et redéposé, lors des charges sur l'électrode négative. Au bout d'un certain de nombre de cycles, notamment lorsque la membrane électrolytique comprend un électrolyte liquide, des dendrites de lithium peuvent se former, ce qui, d'une part, peut contribuer à dénaturer l'intégrité physique de la membrane et, d'autre part, peut engendrer un phénomène de court-circuit, lorsque les dendrites relient physiquement l'électrode négative à l'électrode positive, ce qui peut se traduire, notamment, par une élévation substantielle de la température de la batterie et sa dégradation irréversible. De plus, le lithium métallique peut réagir avec un électrolyte liquide, pour former de la mousse de lithium partiellement inactive, qui entraîne une perte de matière active au fur et à mesure des cyclages induisant ainsi une durée de vie limitée des accumulateurs fonctionnant avec du lithium métallique au niveau de l'électrode négative.

Pour empêcher la formation de mousse et de dendrites, il a été proposé sur le marché des accumulateurs au lithium, dont l'électrode négative est à base de lithium métallique, d'utiliser un électrolyte solide pour assurer la séparation entre l'électrode négative et l'électrode positive, et plus spécifiquement un électrolyte polymère comprenant du polyoxyéthylène (connu sous l'abréviation POE). Cet électrolyte est moins réactif vis-à-vis du lithium métallique par rapport à des électrolytes liquides ou gélifiés et est, qui plus est, utilisé sous forme de couche mince, ce qui nécessite des densités surfaciques de courant plus faibles et amoindrit ainsi le risque de formation de dendrites. Toutefois, cette technologie nécessite une température de fonctionnement élevée (et notamment supérieure à 50°C) pour compenser une conductivité insuffisante de cet électrolyte solide à température ambiante.

Afin de pouvoir bénéficier des propriétés inhérentes à l'utilisation du lithium métallique (notamment en termes de densité massique et volumique) tout en se passant des inconvénients liés à l'utilisation d'un électrolyte polymère, les auteurs de la présente invention se sont fixé pour objectif de proposer une cellule électrochimique pour accumulateur au lithium mettant en œuvre, comme électrode négative, une électrode en lithium métallique, tout en permettant de limiter le phénomène de formation de mousse de lithium et dendrites et d'obtenir de bonnes propriétés de cyclabilité.

### EXPOSÉ DE L'INVENTION

Ainsi, l'invention a trait à une cellule électrochimique pour accumulateur au lithium comprenant :
- une électrode négative comprenant, comme matériau actif, du lithium métallique ;
- une électrode positive associée à un collecteur de courant en aluminium; et
- un électrolyte disposé entre ladite électrode négative et ladite électrode positive, caractérisée en ce que l'électrode négative est pourvue, au niveau de sa face en contact avec l'électrolyte, d'une couche comprenant un composé comprenant de l'aluminium et en ce que l'électrolyte comprend au moins un sel de lithium choisi parmi les sels imidures de lithium, le triflate de lithium, le perchlorate de lithium et des mélanges de ceux-ci.

Les auteurs de la présente invention ont pu mettre en évidence, grâce à la présence de cette couche à la surface de l'électrode négative, d'excellentes propriétés de cyclabilité, qui peuvent s'expliquer notamment par le rôle protecteur assuré par cette couche vis-à-vis du phénomène de formation de mousse et de dendrites.

Avant d'entrer plus en détail dans l'exposé de cette invention, nous précisons les définitions suivantes.

Par électrode négative, on entend, classiquement, dans ce qui précède et ce qui suit, l'électrode qui fait office d'anode, quand la batterie débite du courant (c'est-à-dire lorsqu'elle est en processus de décharge) et qui fait office de cathode, lorsque la batterie est en processus de charge.

Par électrode positive, on entend, classiquement, dans ce qui précède et ce qui suit, l'électrode qui fait office de cathode, quand la batterie débite du courant (c'est-à-dire lorsqu'elle est en processus de décharge) et qui fait office d'anode lorsque la batterie est en processus de charge.

Selon l'invention, l'électrode négative comprend, comme matériau actif, du lithium métallique. En particulier, elle peut être constituée exclusivement de lithium métallique (ce qui signifie, en d'autres termes, qu'elle ne comprend pas d'autres ingrédients que du lithium métallique). Elle peut être également associée à un collecteur de courant et, plus spécifiquement, un collecteur de courant en cuivre.

D'un point de vue structural, l'électrode négative peut se présenter sous forme d'une plaque de lithium ou d'une feuille de lithium présentant une épaisseur allant de 5 µm à 500 µm.

L'électrode positive peut comprendre, de préférence, comme matériau actif, un matériau actif choisi parmi les phosphates lithiés comprenant au moins un élément métallique de transition, les oxydes lithiés comprenant au moins un élément métallique (par exemple, au moins un élément métallique de transition et/ou au moins un élément métallique de post-transition), les sulfures métalliques à base de lithium, les oxydes de vanadium, les disulfures à base d'au moins un élément métallique de transition, le soufre élémentaire et les mélanges de ceux-ci.

Comme phosphates lithiés comprenant au moins un élément métallique de transition, il peut être mentionné des phosphates lithiés de formule LiM¹PO₄, dans laquelle M¹ est choisi parmi Fe, Mn, Ni, Co et les mélanges de ceux-ci, tel que LiFePO₄, LiMnPO₄.

Comme oxydes lithiés comprenant au moins un élément métallique, il peut être cité des oxydes simples ou des oxydes mixtes (c'est-à-dire des oxydes comprenant plusieurs éléments métalliques distincts) comprenant au moins un élément métallique, tels que des oxydes comprenant du nickel, du cobalt, du manganèse et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule suivante :

Li₁₊ₓM²O₂

dans laquelle M² est un élément choisi parmi Ni, Co, Mn, Al et les mélanges de ceux-ci et x étant supérieur ou égal à 0.

A titre d'exemples de tels oxydes, on peut citer les oxydes lithiés LiCoO₂, LiNiO₂ et les oxydes mixtes Li(Ni,Co,Mn)O₂ (tel que Li(Ni_{1/3}Mn_{1/3}Co_{1/3})O₂, Li(Ni_{0,8}Mn_{0,1}Co_{0,1})O₂ ou Li(Ni_{0,6}Mn_{0,2}Co_{0,2})O₂ (connu également sous la dénomination NMC)), Li(Ni,Co,Al)O₂ (tel que Li(Ni_{0,8}Co_{0,15}Al_{0,05})O₂ connu également sous la dénomination NCA) ou Li(Ni,Co,Mn,Al)O₂, les oxydes dits riches en lithium ou surlithiés, tels que ceux répondant à la formule Li₁₊ₓ(Ni,Co,Mn)O₂, x étant supérieur à 0.

Comme oxydes comprenant du nickel, du cobalt, du manganèse et/ou de l'aluminium, on peut citer également les oxydes de structure spinelle, tels que LiMn₂O₄.

Comme sulfures métalliques à base de lithium, il peut s'agir avantageusement de sulfures métalliques à base de lithium du type « rock-salt » et, en particulier, des composés de formule Li₂TiS₃ ou Li₃NbS₄.

Comme oxydes de vanadium, on peut citer, en particulier, l'oxyde de vanadium V₂O₅.

Comme disulfures à base d'au moins un élément métallique de transition, il peut être mentionné, en particulier, des disulfures cristallisant dans un système cristallin de type pyrite, tel que FeS₂, TiS₂.

Outre la présence d'un matériau actif, l'électrode positive peut comprendre un liant organique, en particulier, un liant polymérique, tel que du polyfluorure de vinylidène (connu sous l'abréviation PVDF), un mélange carboxyméthylcellulose (connu sous l'abréviation CMC) avec un latex du type styrène-butadiène (connu sous l'abréviation SBR) ou avec de l'acide polyacrylique (connu sous l'abréviation PAA) ainsi que un ou plusieurs adjuvants conducteurs de l'électricité, qui peuvent être des matériaux carbonés comme du noir de carbone.

Aussi, d'un point de vue structural, l'électrode positive peut se présenter sous forme d'un matériau composite comprenant une matrice en liant(s) polymérique(s), tel(s) que du PVDF (par exemple, à hauteur de 1 à 10 % en masse par rapport à la masse totale de l'électrode), au sein de laquelle sont dispersées des charges constituées par le matériau actif (par exemple, à hauteur de 80 à 98% en masse par rapport à la masse totale de l'électrode) et éventuellement le ou les adjuvants conducteurs de l'électricité, tel que du noir de carbone (par exemple, à hauteur de 1 à 8% en masse par rapport à la masse totale de l'électrode), lequel matériau composite étant déposée sur une collecteur de courant en aluminium.

Les cellules de l'invention comprennent, également, un électrolyte disposé entre l'électrode positive et l'électrode négative, la surface de l'électrode négative en contact avec l'électrolyte étant pourvue d'une couche comprenant un composé comprenant de l'aluminium et l'électrolyte comprenant au moins un sel de lithium choisi parmi les sels imidures de lithium, du triflate de lithium, du perchlorate de lithium et des mélanges de ceux-ci.

Plus spécifiquement, l'électrolyte peut être un électrolyte liquide, qui peut comprendre, outre le ou les sels de lithium susmentionnés, un ou plusieurs solvants organiques, le ou les solvants organiques pouvant être :
- des solvants de la famille des solvants carbonates tels que les solvants carbonates cycliques, les solvants carbonates linéaires, et les mélanges de ceux-ci ;
- des solvants de la famille des éthers, tels que le 1,3-dioxolane, le tétraéthylèneglycoldiméthyléther, le 1,2-diméthoxyéthane ; et
- des mélanges de ceux-ci.

L'électrolyte peut être également un électrolyte gélifié, par exemple, un électrolyte liquide, tel que celui explicité ci-dessus, imprégnant une matrice polymère (par exemple, une matrice en polyoxyde d'éthylène (désigné également par l'abréviation POE), en polyacrylonitrile (désigné également par l'abréviation PAN), en polyméthacrylate de méthyle (désigné également par l'abréviation PMMA) ou en polyfluorure de vinylidène (désigné également par l'abréviation PVDF), qui gélifie au contact de cet électrolyte liquide.

A titre d'exemples de solvants carbonates cycliques, on peut citer le carbonate d'éthylène (symbolisé par l'abréviation EC) ou le carbone de propylène (symbolisé par l'abréviation PC).

A titre d'exemples de solvants carbonates linéaires, on peut citer le carbonate de diméthyle (symbolisé par l'abréviation DMC), le carbonate de diéthyle (symbolisé par l'abréviation DEC) ou le carbonate d'éthylméthyle (symbolisé par l'abréviation EMC).

En particulier, l'électrolyte liquide peut comprendre un mélange de solvants carbonates, par exemple, un mélange EC/DMC, par exemple, en quantités égales.

Lorsque le ou les sels de lithium sont des sels imidures de lithium, ils peuvent être, en particulier, choisis parmi les sels imidures de lithium, tel que le *bis*(trifluorométhane)sulfonylimidure de lithium de formule Li[N(SO₂CF₃)₂) (connu sous l'abréviation LiTFSI), le *bis*(fluorosulfonyl)imidure de lithium de formule Li[N(SO₂F)₂] (connu sous l'abréviation LiFSI) et le *bis*(pentafluoroéthane)sulfonylimidure de lithium de formule Li[N(SO₂CF₂CF₃)₂] (connu sous l'abréviation LiBETI).

En outre, l'électrolyte, lorsque l'électrolyte est un électrolyte liquide, c'est-à-dire non gélifié, peut être amené à imbiber un élément séparateur, par exemple, un élément séparateur polymérique poreux, disposé entre les deux électrodes de l'accumulateur, étant entendu que le ou les polymères constitutifs du séparateur ne gélifient pas contrairement au cas de figure des électrolytes gélifiés.

En particulier, des cellules électrochimiques avantageuses conformes à l'invention comprennent les combinaisons sel de lithium/matériau actif d'électrode positive suivantes :
*lorsque le sel de lithium est du LiTFSI, l'électrode positive comprend, avantageusement, comme matériau actif, un phosphate lithié comprenant au moins un élément métallique de transition, tel que LiFePO₄ et/ou un disulfure à base d'au moins un élément métallique de transition, tel que TiS₂ ou FeS₂ et/ou un oxyde de vanadium, tel que V₂O₅ et/ou un sulfure métallique à base de lithium du type « rock-salt », tel que Li₂TiS₃ ou Li₃NbS₄ ;
*lorsque le sel de lithium est du perchlorate de lithium, l'électrode positive comprend, avantageusement, comme matériau actif, du soufre élémentaire ;
*lorsque le sel de lithium est du LiFSI, l'électrode positive comprend, avantageusement, comme matériau actif, un phosphate lithié comprenant au moins un élément métallique de transition, tel que LiFePO₄ et/ou un disulfure à base d'au moins un élément métallique de transition, tel que TiS₂ ou FeS₂ et/ou un oxyde de vanadium, tel que V₂O₅ et/ou un sulfure métallique à base de lithium du type « rock-salt », tel que Li₂TiS₃ ou Li₃NbS₄ et/ou un oxyde lithié comprenant au moins un élément métallique, tel que Li(Mn,Ni,Co)O₂ ;
*lorsque le sel de lithium est du triflate de lithium, l'électrode positive comprend, avantageusement, comme matériau actif, du soufre élémentaire et/ou un disulfure à base d'au moins un élément métallique de transition, tel que TiS₂ ou FeS₂ et/ou un sulfure métallique à base de lithium du type « rock-salt », tel que Li₂TiS₃ ou Li₃NbS₄ ;
*lorsque le sel de lithium est du LiBETI, l'électrode positive comprend, avantageusement, comme matériau actif, un phosphate lithié comprenant au moins un élément métallique de transition, tel que LiFePO₄ ou LiMnPO₄ et/ou du soufre élémentaire et/ou un disulfure à base d'au moins un élément métallique de transition, tel que TiS₂ ou FeS₂ et/ou un oxyde de vanadium, tel que V₂O₅ et/ou un sulfure métallique à base de lithium du type « rock-salt », tel que Li₂TiS₃ ou Li₃NbS₄ et/ou un oxyde lithié comprenant au moins un élément métallique, tel que LiCoO₂, Li(Mn,Ni,Co)O₂ (tel que LiNi_{0,6}Mn_{0,2}Co_{0,2}O₂, LiNi_{0,8}Mn_{0,1}Co_{0,1}O₂), Li(Ni,Co,Al)O₂ (tel que LiNi_{0,8}Co_{0,15}Al_{0,05}O₂), LiMn₂O₄ ou un oxyde surlithié comprenant du manganèse, du nickel et éventuellement du cobalt, tel que celui répondant à la formule Li₁₊ₓ(Mn,Ni,Co)O₂ (avec x>0, par exemple x=0,2, tel que Li_{1,2}Mn_{0,6}Ni_{0,2}O₂).

Le composé comprenant de l'aluminium peut être un sel d'aluminium et, plus spécifiquement, un sel d'aluminium formé *in situ.* Encore plus spécifiquement, le sel d'aluminium peut être un sel d'aluminium ayant des cations aluminium pouvant provenir de la corrosion partielle du collecteur de courant en aluminium associé à l'électrode positive. Les anions du sel d'aluminium peuvent, quant à eux, provenir de ceux du sel de lithium de l'électrolyte ou d'une décomposition des anions du sel de lithium de l'électrolyte.

Par exemple, le sel d'aluminium peut comporter, comme anions, des anions comprenant un ou plusieurs atomes d'halogène, tel que du fluor et/ou du chlore et, plus spécifiquement, des anions comprenant un ou plusieurs atomes de fluor tel que des anions imidures et, encore plus spécifiquement, des anions (trifluorométhane)sulfonylimidure, notamment lorsque le sel de lithium utilisé est le LiTFSI ; ou un anion triflate, notamment lorsque le sel de lithium utilisé est le triflate de lithium.

Le composé comprenant de l'aluminium peut être, également, un alliage de lithium et d'aluminium.

Une cellule spécifique conforme à l'invention est une cellule dans laquelle :
- l'électrode positive comprend, comme matériau actif, un phosphate lithié comprenant au moins un élément métallique de transition, tel que LiFePO₄; et/ou
- l'électrolyte est un électrolyte liquide comprenant au moins un sel imidure de lithium, tel que LiTFSI et un ou plusieurs solvants carbonates, tel qu'un mélange EC/DMC.

Les cellules de l'invention peuvent être préparées ou régénérées par un procédé comprenant une étape consistant à soumettre :
- une cellule comprenant une électrode négative comprenant, comme matériau actif, du lithium métallique ; une électrode positive associée à un collecteur de courant en aluminium; et un électrolyte disposé entre ladite électrode négative et ladite électrode positive comprenant au moins un sel de lithium choisi parmi les sels imidures de lithium, du triflate de lithium, du perchlorate de lithium et des mélanges de ceux-ci ;
à un potentiel de corrosion de l'aluminium pendant une durée suffisante pour obtenir une corrosion partielle du collecteur en aluminium et la formation concomitante d'une couche comprenant un composé comprenant de l'aluminium sur la face de l'électrode négative en contact avec l'électrolyte.

Pour fixer ce potentiel de corrosion et sa durée d'application, des essais préalables peuvent être effectués avec une cellule test répondant aux mêmes spécificités que celles que l'on veut soumettre au procédé, les essais préalables consistant à tester différents couples de potentiel et de durée jusqu'à obtenir le couple permettant l'obtention de la couche, l'obtention de cette couche pouvant être suivie par spectroscopie EDX. La température peut être également ajustée, sachant que le critère de température peut avoir une influence sur la quantité de matière corrodée et, par voie de conséquence, sur la quantité de couche déposée.

Avantageusement, le potentiel de corrosion est fixé à une valeur supérieure à la plage de tension de fonctionnement de la cellule, des exemples de plages de tension de fonctionnement étant donnés pour des couples matériau actif/sel de lithium spécifiques dans le tableau présenté plus loin.

Selon un mode particulier de réalisation, la cellule soumise au procédé ne comprend pas de couche comprenant un composé comprenant de l'aluminium, ce qui signifie que le procédé est mis en œuvre sur une cellule n'ayant pas encore fonctionné. En variante, la cellule soumise au procédé peut comprendre une couche dégradée comprenant un composé comprenant de l'aluminium, ce qui signifie, dans ce dernier cas, que le procédé peut être un procédé de régénération et qu'il peut être mis en œuvre avec une cellule ayant déjà fait l'objet d'une utilisation. En effet, pour une cellule conforme à l'invention ayant déjà fait l'objet d'un ou plusieurs cyclages, une couche de lithium peut être amenée à se former à la surface de la couche comprenant un composé comprenant de l'aluminium, rendant ainsi opportun le rafraîchissement de cette couche en mettant en œuvre le procédé susmentionné.

A titre d'exemple, lorsque la cellule comprend un électrolyte comprenant un sel de lithium LiTFSI et que l'électrode positive comprend, comme matériau actif, du LiFePO₄, le potentiel de corrosion peut être fixé à une valeur de l'ordre de 4,5 V vs Li⁺/Li et maintenu pendant une durée de l'ordre de 10 heures pour obtenir la formation d'une couche comprenant de l'aluminium.

D'autres exemples figurent dans le tableau ci-dessous indiquant pour des couples spécifiques sel de lithium/matériau actif d'électrode positive le potentiel à appliquer pour obtenir une corrosion partielle de l'aluminium nécessaire à la formation d'une couche comprenant de l'aluminium ainsi que la plage de tension de fonctionnement pour ces couples.

**[Table 1]**

| Sel de lithium | Matériau actif de cathode | Potentiel de corrosion (en V vs. Li⁺/Li) | Plage de tension de fonctionnement (en V vs. Li⁺/Li) |
|---|---|---|---|
| LiTFSI | LiFePO₄ | >4 | 2,5-3,7 |
| LiTFSI | TiS₂ | >4 | 1,5-3 |
| LiTFSI | FeS₂ | >4 | 0,5-2 |
| LiTFSI | V₂O₅ | >4 | 2-4 |
| LiTFSI | Li₂TiS₃ | >4 | 1,5-3 |
| LiTFSI | Li₃NbS₄ | >4 | 1,5-3 |
| LiClO₄ | Soufre élémentaire S₈ | 4,5 | 1,5-3 |
| LiFSI | LiFePO₄ | >4,5 | 2,5-3,7 |
| LiFSI | TiS₂ | >4,5 | 1,5-3 |
| LiFSI | FeS₂ | >4,5 | 0,5-2 |
| LiFSI | V₂O₅ | >4,5 | 2-4 |
| LiFSI | Li₂TiS₃ | >4,5 | 1,5-3 |
| LiFSI | Li₃NbS₄ | >4,5 | 1,5-3 |
| LiFSI | Li(Mn,Ni,Co)O₂ | >4,5 | 3-4,3 |
| Triflate de lithium | Soufre élémentaire S₈ | >3 | 1,5-2,5 |
| Triflate de lithium | TiS₂ | >3 | 1,5-2,5 |
| Triflate de lithium | FeS₂ | >3 | 0,5-2 |
| Triflate de lithium | Li₂TiS₃ | >3 | 1,5-2,5 |
| Triflate de lithium | Li₃NbS₄ | >3 | 1,5-2,5 |
| LiBETI | LiFePO₄ | >4,5 | 2,5-3,7 |
| LiBETI | Soufre élémentaire S₈ | >4,5 | 1,5-3 |
| LiBETI | TiS₂ | >4,5 | 1,5-3 |
| LiBETI | FeS₂ | >4,5 | 0,5-2 |
| LiBETI | V₂O₅ | >4,5 | 2-4 |
| LiBETI | Li₂TiS₃ | >4,5 | 1,5-3 |
| LiBETI | Li₃NbS₄ | >4,5 | 1,5-3 |
| LiBETI | LiCoO₂ | >4,5 | 3-4,2 |
| LiBETI | Li(Mn,Ni,Co)O₂ | >4,5 | 3-4,2 |
| LiBETI | Li(Ni,Co,Al)O₂ | >4,5 | 3,5-4,3 |
| LiBETI | LiMnPO₄ | >4,5 | 3,5-4,3 |
| LiBETI | LiMn₂O₄ | >4,5 | 3,5-4,3 |
| LiBETI | Li₁₊ₓ(Mn,Ni,Co)O₂ | >4,5 | 3,5-4,4 |

Enfin, l'invention a trait à l'utilisation d'une couche comprenant un composé comprenant de l'aluminium sur une électrode en lithium métallique comprise dans une cellule, en vue d'améliorer sa cyclabilité, ladite cellule comprenant une électrode positive associée à un collecteur de courant en aluminium et un électrolyte disposé entre l'électrode positive et l'électrode négative et comprenant au moins un sel de lithium choisi parmi les sels imidures de lithium, du triflate de lithium, du perchlorate de lithium et des mélanges de ceux-ci, ladite couche comprenant un composé comprenant de l'aluminium étant déposée sur la face de l'électrode négative en contact avec l'électrolyte.

Les spécificités de l'électrode positive, de l'électrolyte et de la couche déjà définies pour les cellules en tant que telles sont également valables pour cette utilisation.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

### BRÈVE DESCRIPTION DES DESSINS

[Fig. 1] représente une vue en coupe d'une cellule spécifique conforme à l'invention.
[Fig. 2] est un graphique illustrant l'évolution du potentiel U (en V) (ordonnée de gauche) en fonction de la durée t (en h) (courbe a) et l'évolution simultanée du courant I (en A) (ordonnée de droite) en fonction de la durée t (en h) (courbe b) pour une cellule spécifique conforme à l'invention.
[Fig. 3] est un graphique illustrant l'évolution du potentiel U (en V) (ordonnée de gauche) en fonction de la durée t (en h) (courbe a) et l'évolution simultanée du courant I (en A) (ordonnée de droite) en fonction de la durée t (en h) (courbe b) pour une cellule spécifique non conforme à l'invention.
[Fig. 4] est un graphique illustrant l'évolution de la capacité de décharge C (en Ah) en fonction du nombre de cycles N (courbe a) pour une cellule spécifique conforme à l'invention et courbe b) pour une cellule spécifique non conforme à l'invention.

### EXPOSÉ DÉTAILLÉ DE MODES DE RÉALISATION PARTICULIERS

### EXEMPLE

Cet exemple illustre une cellule électrochimique conforme à l'invention et, à titre comparatif, une cellule non conforme à l'invention (dite première cellule non conforme à l'invention), afin de démontrer l'apport de la couche comportant une composé comprenant de l'aluminium sur l'électrode de lithium sur les propriétés de cyclabilité de cette cellule.

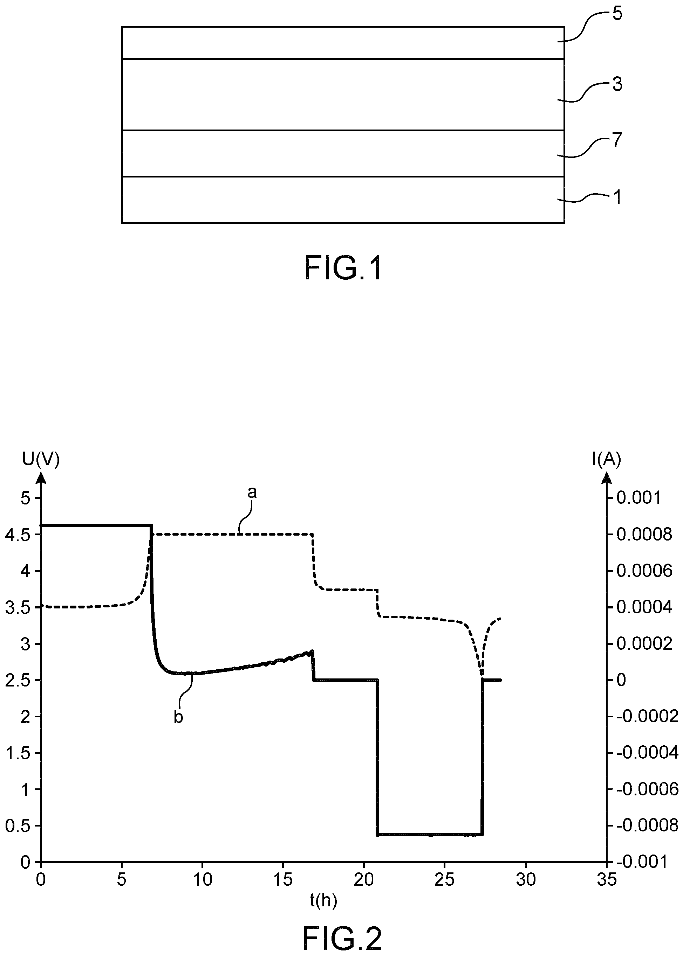

Dans cet exemple, lesdites cellules électrochimiques se présentent, avant le cycle de formation, sous forme d'une pile bouton comportant un empilement de couches, comme illustré sur [Fig. 1] jointe en annexe comprenant :
- une électrode négative 1 constituée de lithium métallique sous forme d'un disque de 16 mm de diamètre et de 150 µm d'épaisseur, lequel disque est déposé sur une cale en inox (non représentée) ayant fonction de collecteur de courant ;
- une électrode positive 3 comportant, comme matériau actif, du LiFePO₄, comme matériau conducteur de l'électricité, du noir de carbone et comme liant polymérique, du PVDF dans des proportions massiques respectives 90,5/5/4,5, ladite électrode positive étant déposée sur un collecteur de courant en aluminium 5 constitué d'un disque d'une surface de 154 mm² et d'une épaisseur de 20 µm ; et
- un séparateur poreux 7 constitué d'un disque en polyoléfine présentant un diamètre de 16,5 mm et une épaisseur de 25 µm, lequel séparateur est imbibé d'un électrolyte liquide consistant, pour la cellule conforme à l'invention, en un mélange de solvants carbonates (carbonate d'éthylène/carbonate de diméthyle) et du LiTFSI 1M et, pour la cellule non conforme à l'invention, en un mélange de solvants carbonates (carbonate d'éthylène/carbonate de diméthyle) et du LiPF₆ 1M.

Chacune de ces cellules est soumise à un cycle de formation avec, notamment pour caractéristique commune, l'application d'un palier de potentiel fixé à 4,5V (vs. Li⁺/Li) pendant une durée de 10 heures.

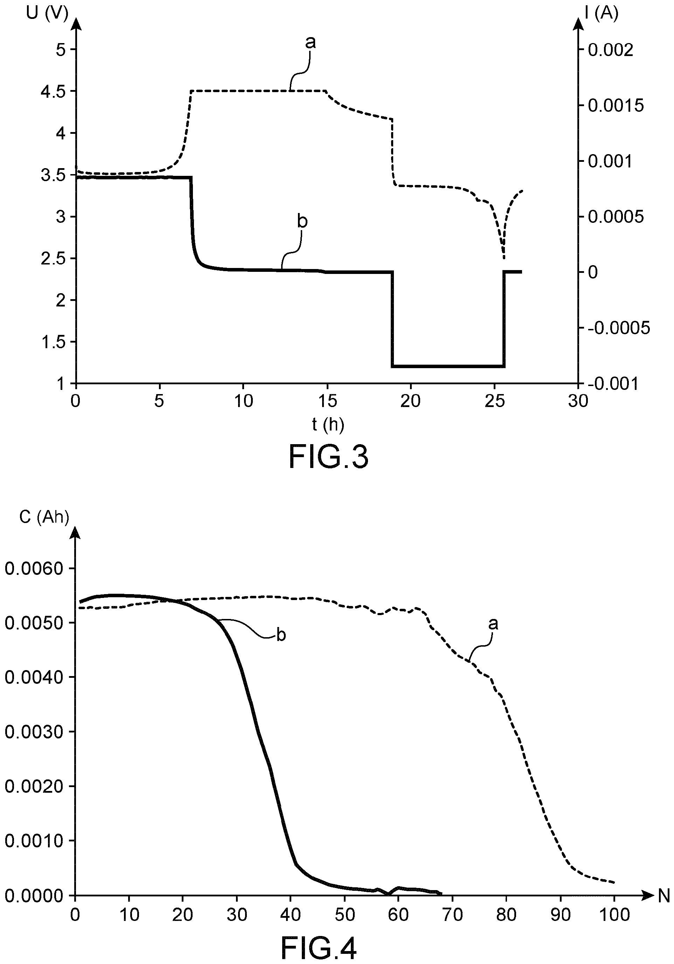

Les caractéristiques du cycle de formation et du courant généré lors de ce cycle sont reportées, pour la cellule conforme à l'invention, sur la figure 2 et, pour la cellule non conforme à l'invention, sur la figure 3, ces figures illustrant, d'une part, l'évolution du potentiel U (en V) (ordonnée de gauche) en fonction de la durée t (en h) (courbes a) sur [Fig. 2] et [Fig. 3]) et l'évolution simultanée du courant I (en A) (ordonnée de droite) en fonction de la durée t (en h) (courbes b) sur [Fig. 2] et [Fig. 3]).

Pour la cellule conforme à l'invention, lors du palier à 4,5 V, il a été constaté, dans un premier temps, une diminution du courant puis, dans un deuxième temps, une augmentation, qui traduit un courant de corrosion indiquant un phénomène de corrosion partielle du collecteur en aluminium.

Plus spécifiquement, au cours du palier à 4,5V, 0,94mAh de capacité sont chargés. En supposant la réaction de corrosion Al → Al³⁺ + 3 e⁻ (3x96500C par mol d'aluminium corrodé, soit 80,4 Ah/mol), 1,17x10⁻⁵ mol d'aluminium ont été corrodées. Cela correspond à 0,3 mg d'aluminium, ou 0,1 mm³ d'Al. La surface de collecteur dans la pile bouton est de 154 mm². On déduit qu'environ 0,7 µm de collecteur a été corrodé sur les 20 µm totaux, ce qui ne met pas en péril sa fonction de conduction électrique.

Pour la cellule non conforme à l'invention, lors du palier à 4,5 V, il a été constaté, dans un premier temps, une diminution du courant puis, dans un deuxième temps, une stabilisation de celui-ci, ce qui traduit l'absence de corrosion, cette absence de corrosion se poursuivant jusqu'à au moins 5 V.

Après ce cycle de formation, chaque cellule est soumise à un cyclage galvanostatique dans une gamme de potentiels allant de 2,5 à 3,7 V et à un courant de 0,85 mA, les résultats étant reportés sur [Fig. 4] jointe en annexe illustrant l'évolution de la capacité de décharge C (en Ah) en fonction du nombre de cycles N (courbe a) pour la cellule conforme à l'invention et courbe b) pour la cellule non conforme à l'invention).

Il apparaît une amélioration significative de la cyclabilité de la cellule conforme à l'invention (avec une stabilité de la capacité sur au moins 60 cycles) par rapport à la cellule non conforme à l'invention utilisant du LiPF₆ comme sel de lithium et n'ayant pas subi de phénomène de corrosion partielle du collecteur en aluminium.

Pour fournir une explication à ce phénomène, les auteurs de la présente invention ont réalisé ce cyclage galvanostatique avec une deuxième série de cellules (une cellule conforme à l'invention et une cellule non conforme à l'invention) répondant aux mêmes spécificités que celles mentionnées ci-dessus et ayant subi un cycle de formation identique à celui défini ci-dessus, le cyclage galvalnostatique étant stoppé dans ce cas à 6 cycles.

Les cellules ont été ensuite ouvertes et l'électrode négative de lithium a été analysée par spectroscopie EDX.

Il ressort pour la cellule conforme à l'invention la présence sur l'électrolyte de lithium d'une couche comprenant un composé comprenant de l'aluminium, l'aluminium provenant de la corrosion partielle du collecteur de courant.

La cellule non conforme à l'invention ne présente pas une telle couche à la surface de l'électrode de lithium, la surface de l'électrode de lithium étant notamment dénuée d'aluminium.

Il en est ainsi déduit que la présence de cette couche à la surface de l'électrode de lithium en contact avec l'électrolyte liquide comprenant du LiTFSI contribue à améliorer la cyclabilité de la cellule conforme à l'invention.

Enfin, pour bien démontrer que l'amélioration de la cyclabilité n'est pas simplement due au sel de lithium utilisé, des cellules non conformes à l'invention (plus spécifiquement, une deuxième cellule non conforme à l'invention ayant, comme électrolyte, du LiPF₆ dans un mélange de solvants carbonates EC/DMC et une troisième cellule non conforme à l'invention ayant, comme électrolyte, du LiTSI dans un mélange de solvants carbonates EC/DMC, ces cellules non conformes étant par ailleurs similaires à la première cellule non conforme à l'invention concernant les électrodes positive et négative) ont été fabriquées et cyclées entre 2,5 et 3,7 V sans application d'un palier à 4,5 V (à savoir, un palier permettant, le cas échéant, la formation de la couche comprenant de l'aluminium à la surface de l'électrode négative). Dans les deux cas, la cyclabilité est similaire à celle de la première cellule non conforme à l'invention.

## Revendications

1. Cellule électrochimique pour accumulateur au lithium comprenant :
- une électrode négative comprenant, comme matériau actif, du lithium métallique ;
- une électrode positive associée à un collecteur de courant en aluminium; et
- un électrolyte liquide ou gélifié disposé entre ladite électrode négative et ladite électrode positive, **caractérisée en ce que** l'électrode négative est pourvue, au niveau de sa face en contact avec l'électrolyte, d'une couche comprenant un composé comprenant de l'aluminium, lequel composé est un sel d'aluminium, et **en ce que** l'électrolyte comprend au moins un sel de lithium choisi parmi les sels imidures de lithium, le triflate de lithium, le perchlorate de lithium et des mélanges de ceux-ci.

2. Cellule selon la revendication 1, dans laquelle l'électrode positive comprend, comme matériau actif, un matériau actif choisi parmi les phosphates lithiés comprenant au moins un élément métallique de transition, les oxydes lithiés comprenant au moins un élément métallique, les sulfures métalliques à base de lithium, les oxydes de vanadium, les disulfures à base d'au moins un élément métallique de transition, le soufre élémentaire et les mélanges de ceux-ci.

3. Cellule selon la revendication 2, dans laquelle, lorsque le matériau actif est un phosphate lithié comprenant au moins un élément métallique de transition, il correspond à un phosphate lithié de formule LiM¹PO₄, dans laquelle M¹ est choisi parmi Fe, Mn, Ni, Co et les mélanges de ceux-ci.

4. Cellule selon la revendication 2, dans laquelle, lorsque le matériau actif est un oxyde lithié comprenant au moins un élément métallique, il correspond à un oxyde lithié comprenant du nickel, du cobalt, du manganèse et/ou de l'aluminium.

5. Cellule selon la revendication 4, dans laquelle l'oxyde lithié comprenant du nickel, du cobalt, du manganèse et/ou de l'aluminium répond à la formule suivante :
Li₁₊ₓM²O₂
dans laquelle M² est un élément choisi parmi Ni, Co, Mn, Al et les mélanges de ceux-ci et x étant supérieur ou égal à 0.

6. Cellule selon la revendication 2, dans laquelle, lorsque le matériau actif est un sulfure métallique à base de lithium, il correspond à un sulfure métallique à base de lithium du type « rock-salt », tel que Li₂TiS₃ ou Li₃NbS₄.

7. Cellule selon la revendication 2, dans laquelle, lorsque le matériau actif est un oxyde de vanadium, il correspond à l'oxyde de vanadium V₂O₅.

8. Cellule selon la revendication 2, dans laquelle, lorsque le matériau actif est un disulfure à base d'au moins un élément métallique de transition, il correspond à un disulfure cristallisant dans un système cristallin de type pyrite, tel que FeS₂, TiS₂.

9. Cellule selon l'une quelconque des revendications précédentes, dans laquelle l'électrolyte liquide comprend un ou plusieurs solvants organiques de la famille des solvants carbonates et/ou de la famille des solvants éthers.

10. Cellule selon l'une quelconque des revendications 1 à 8, dans laquelle l'électrolyte gélifié est un électrolyte liquide imprégnant une matrice polymère qui gélifie au contact de cet électrolyte liquide.

11. Cellule selon la revendication 10, dans laquelle l'électrolyte liquide imprégnant la matrice polymère est un électrolyte liquide tel que défini à la revendication 9.

12. Cellule selon l'une quelconque des revendications précédentes, dans laquelle, lorsque le ou les sels de lithium sont des sels imidures de lithium, ils sont choisis parmi le *bis*(trifluorométhane)sulfonylimidure de lithium de formule Li[N(SO₂CF₃)₂), le *bis*(fluorosulfonyl)imidure de lithium de formule Li[N(SO₂F)₂] et le *bis*(pentafluoroéthane)sulfonylimidure de lithium de formule Li[N(SO₂CF₂CF₃)₂].

13. Cellule électrochimique selon l'une quelconque des revendications précédentes, dans laquelle :
*lorsque le sel de lithium est du *bis*(trifluorométhane)sulfonylimidure de lithium, l'électrode positive comprend, comme matériau actif, un phosphate lithié comprenant au moins un élément métallique de transition, tel que LiFePO₄ et/ou un disulfure à base d'au moins un élément métallique de transition, tel que TiS₂ ou FeS₂ et/ou un oxyde de vanadium, tel que V₂O₅ et/ou un sulfure métallique à base de lithium du type « rock-salt », tel que Li₂TiS₃ ou Li₃NbS₄ ;
*lorsque le sel de lithium est du perchlorate de lithium, l'électrode positive comprend, comme matériau actif, du soufre élémentaire ;
*lorsque le sel de lithium est du *bis*(fluorosulfonyl)imidure de lithium, l'électrode positive comprend, comme matériau actif, un phosphate lithié comprenant au moins un élément métallique de transition, tel que LiFePO₄ et/ou un disulfure à base d'au moins un élément métallique de transition, tel que TiS₂ ou FeS₂ et/ou un oxyde de vanadium, tel que V₂O₅ et/ou un sulfure métallique à base de lithium du type « rock-salt », tel que Li₂TiS₃ ou Li₃NbS₄ et/ou un oxyde lithié comprenant au moins un élément métallique, tel que Li(Mn,Ni,Co)O₂ ;
*lorsque le sel de lithium est du triflate de lithium, l'électrode positive comprend, comme matériau actif, du soufre élémentaire et/ou un disulfure à base d'au moins un élément métallique de transition, tel que TiS₂ ou FeS₂ et/ou un sulfure métallique à base de lithium du type « rock-salt », tel que Li₂TiS₃ ou Li₃NbS₄ ;
*lorsque le sel de lithium est du LiBETI, l'électrode positive comprend, comme matériau actif, un phosphate lithié comprenant au moins un élément métallique de transition, tel que LiFePO₄ ou LiMnPO₄ et/ou du soufre élémentaire et/ou un disulfure à base d'au moins un élément métallique de transition, tel que TiS₂ ou FeS₂ et/ou un oxyde de vanadium, tel que V₂O₅ et/ou un sulfure métallique à base de lithium du type « rock-salt », tel que Li₂TiS₃ ou Li₃NbS₄ et/ou un oxyde lithié comprenant au moins un élément métallique, tel que LiCoO₂, Li(Mn,Ni,Co)O₂, Li(Ni,Co,Al)O₂, LiMn₂O₄ ou un oxyde surlithié comprenant du manganèse, du nickel et éventuellement du cobalt.

14. Cellule selon l'une quelconque des revendications précédentes, dans laquelle le sel d'aluminium comporte, comme anions, des anions comprenant un ou plusieurs atomes d'halogène, tel que du fluor et/ou du chlore.

15. Procédé de préparation ou de régénération d'une cellule telle que définie à la revendication 1, comprenant une étape consistant à soumettre :
- une cellule comprenant une électrode négative comprenant, comme matériau actif, du lithium métallique ; une électrode positive associée à un collecteur de courant en aluminium; et un électrolyte disposé entre ladite électrode négative et ladite électrode positive comprenant au moins un sel de lithium choisi parmi les sels imidures de lithium, du triflate de lithium, du perchlorate de lithium et des mélanges de ceux-ci ;
à un potentiel de corrosion de l'aluminium pendant une durée suffisante pour obtenir une corrosion partielle du collecteur en aluminium et la formation concomitante d'une couche comprenant un composé comprenant de l'aluminium sur la face de l'électrode négative en contact avec l'électrolyte.

16. Utilisation d'une couche comprenant un composé comprenant de l'aluminium, qui est un sel d'aluminium, sur une électrode en lithium métallique comprise dans une cellule, en vue d'améliorer sa cyclabilité, ladite cellule comprenant une électrode positive associée à un collecteur de courant en aluminium et un électrolyte liquide ou gélifié disposé entre l'électrode positive et l'électrode négative et comprenant au moins un sel de lithium choisi parmi les sels imidures de lithium, du triflate de lithium, du perchlorate de lithium et des mélanges de ceux-ci, ladite couche comprenant un composé comprenant de l'aluminium étant déposée sur la face de l'électrode négative en contact avec l'électrolyte.
